# EUROPEAN PATENT SPECIFICATION

(11) **EP 1 198 274 B1**
(45) Date of publication and mention of the grant of the patent: **11.05.2005**
(21) Application number: 00948417.1
(22) Date of filing: 21.07.2000
(51) Int. Cl.: A63F 13/12

(54) **SYSTEM FOR SIMULATING EVENTS IN A REAL ENVIRONMENT**
SYSTEM ZUR SIMULATION VON EREIGNISSEN IN EINER ECHTEN UMGEBUNG
SYSTEME POUR LA SIMULATION D'EVENEMENTS DANS UN ENVIRONNEMENT REEL

(30) Priority: 21.07.1999 NL 1012666
(43) Date of publication of application: 24.04.2002
(73) Proprietor: Ong, Thian Liang, 1115 DL Duivendrecht (NL)
(72) Inventor: Ong, Thian Liang, 1115 DL Duivendrecht (NL)
(74) Representative: van Westenbrugge, Andries
(86) International application number: PCT/NL2000/000513
(87) International publication number: WO 2001/005476

(56) References cited:
- EP-A- 0 773 514
- WO-A-98/46029
- FR-A- 2 726 370
- US-A- 5 674 127
- PATENT ABSTRACTS OF JAPAN vol. 1997, no. 09, 30 September 1997 (1997-09-30) & JP 09 114370 A (DENSO CORP), 2 May 1997 (1997-05-02)
- PATENT ABSTRACTS OF JAPAN vol. 1998, no. 13, 30 November 1998 (1998-11-30) & JP 10 216361 A (JATCO CORP), 18 August 1998 (1998-08-18)
- K O CONNEL ET AL: "The VOID Shell, a Toolkit for The Development of Distributed Video Games and Virtual Worlds" PROCEEDINGS OF 1ST WORKSHOP ON SIMULATION AND INTERACTION IN VIRTUAL ENVIRONMENTS, 13 July 1995 (1995-07-13), XP002089776

## Description

The invention relates to a system for simulating events in a real environment containing static objects and dynamic objects according to the preamble of claim 1.

Such a prior art system is described in WO98/46029. In this system the position locating means are embodied as a video system comprising a number of television cameras installed at fixed points around the area on which the event will take place. Each of the cameras provides information about each of the dynamic objects and because each of the cameras has a different view point and sees the various dynamic objects from a different viewing angle it is possible to calculate from this information the exact location of each of the dynamic objects at any moment in time. The more cameras, the more accurate the location can be determined, however, the more calculations have to be performed to obtain the desired results. Before each event the cameras have to be installed at fixed places, the exact location of each of these fixed places in relation to the real environment has to be determined very accurately.

Further systems of this type are already known from the prior art. An example is described in EP0773514. This prior art system is specifically destined to simulate games, sporting events, etc. which take place on a relatively restricted area. Each of the players or competitors in the game carry a transponder and also other moving objects, such as a ball in a ball game have a transponder installed therein or thereon. In the direct vicinity of the area where the game is played a number of receivers is installed which do receive the signals from the various transponders. Each transponder transmits an identity code so that the respective transponder can be recognised. Because the transmitted signals are received by a number of receivers it is possible to determine the exact position of the respective transponder based on phase measurements. Position locating means of this type are known as such and do not require further explanation. The data, obtained by the various receivers is transferred to a processor for calculating the various locations and the location determining data is used for controlling display means on which a simulation of the real environment is made visible whereby the simulated dynamic objects do move in the simulated environment in the same manner as they move in the real environment.

Before each event a transponder has to be installed on each of the moving objects and at least three receivers (preferably more to increase accuracy) have to be installed in the direct vicinity of the area where the event will take place.

In FR2726370 a system is described for providing data about the momentaneous location of each of the players in a game or competitors in a sporting event. The object of these systems is not to gather sufficient data to be able to obtain a simulation of the real environment. The actual object is to provide the arbiter or other officials following the game or the sporting event with sufficient data to be able to take, if necessary, the correct decisions. Two embodiments are described. In the one embodiment a transponder system is used as described in the first above mentioned publication whereas in the second embodiment a television system is used as described in the second above-mentioned publication.

A disadvantage of said prior art system is, that before the event will take place either television cameras or radioreceivers have to be installed around the area. The mutual location of these devices has to be adjusted or measured very accurately. After the event the cameras or receivers have to be removed. Especially in the television camera embodiment significant calculation power is necessary to obtain the desired location position data from the various images.

An object of the invention is now to provide an improved system in which the disadvantages of the prior art systems are eliminated.

In agreement with said object the invention now provides a system for simulating events in a real environment according to claim 1.

As such satellite navigation systems are known from the prior art. In wide spread use is the GPS (Global Positioning System). GPS-receivers are generally available and are used e.g. for navigation on board of the ships, to assist surveying operations etc. GPS is based on an older system named Navstar (navigation by satellite timing and ranging). The GPS system is operated by US military authorities. A similar system, called Glonass, is owned and operated by Russian authorities.

For improved accuracy furthermore so-called differential GPS receivers (DGPS) are known. Thereby use is made of a local reference of which the location is accurately known. By applying a correction on the GPS data based on said reference the general accuracy can be improved significantly.

The use of GPS for locating competitors in a competition or players in a game is already known from the prior art. A first prior art system is described in NL9301186. According to this Dutch publication each competitor in a competition or each player in a game carries a GPS receiver which is connected by suitable means to a transmitter. The positional data, calculated by said receiver based on the signals received from the various satellites, are transferred to the transmitter and transmitted to a central station. The central station receives in this way positional data about all competitors or players which data is used by the arbiters or other judging or controlling staff for taking correct decisions. In other words, the positional data is not used to control the generation of a simulated real environment in which the simulated players are behaving exactly in the same manner as the real players in the real environment.

Another prior art system is described in US5731788. Also in this case each of the competitors carries a GPS receiver connected to a transmitter to transmit the positional data of each competitor to a central station where said data can be used for following the event more closely. Also in this case nothing is said about using the positional data for simulating competitors in a simulated real environment.

In principal any display can be used to make the simulated environment visible to the user. However instead of a pc screen etc. more sophisticated display units as described e.g. in US5674127 can be used. This patent describes a multi user game and has nothing to do with a simulation of a real environment.

Although all the means necessary to provide the simulated environment can be positioned in the direct neighbourhood of the real environment (for instance for controll purposes) in general these means will be installed elsewhere.

A specific embodiment of the invention is therefor characterised in that the storage means, processing means, display means and control means are installed as a user terminal at a place remote from the real environment and that transfer means are used to transfer positional data from the position locating means to the storage means.

More in general the system will be embodied such that for each user of the system storage means, processing means, display means and control means are installed as user terminals at a place remote from the real environment and that transfer means are used to transfer positional data from the position locating means to all said storage means.

It is preferred that the transmission medium, along which the positional data are transferred from the real competition environment to the simulation system, is embodied by the internet. A large advantage thereof is that the positional data can be made available at a certain site and that a varying number of users, from a very small number to a very large number can log in to this site and are able to fetch the positional data into their system. Disadvantage of the use of the internet may be that a certain delay will appear between the moment onto which the positional data are recorded in the real competition and the moment at which the positional data are available in the system. A further disadvantage can be that in case of popular real competitions there are so many people who want to log in onto the site that overload may occur so that it is likely that part of the users cannot be provided with the necessary data.

If one wants to eliminate this disadvantage then it is preferred to make use of a telephone network as transfer medium (wire bounded or wireless). Also in that case a certain delay will take place over the telephone network but said delay can, especially if the competition environment is not too far from the system, considered as neglectible.

It is not necessary under all circumstances that the positional data will be used in the system such that the competition within the simulated environment is synchronous with the real competition (apart from the above indicated communication delay). It is also possible that all positional data together with the corresponding time data are stored on a suitable memory medium and that said memory medium is used as transfer medium. In this embodiment the user may activate his system at any voluntary moment and may "join" a competition, which has taken place in the past.

In the last described embodiment it is preferred that the memory medium is formed by a compact disc (shortly noted as CD) (or similar products, or products derived therefrom).

To maintain the system up to date over a longer period it will be necessary to update the data about the competitors. In reality not always the same competitors will be present in succeeding competitions. To make adaptations possible it is preferred that the system comprises a competitor database in which data are stored about a number of possible competitors so that, after the competitors for a predetermined competition are known, the simulation of the real competitors within a simulated environment can be adapted.

Although a certain database can be filled with data about a large number of competitors such, that it is assured that during a certain period the competitors of the real game are in any case stored in the database, after a certain time it will be necessary to add new data. In that respect it is preferred that the data about competitors which are not in the database can be added through a suitable transfer medium from a suitable source to become stored in the competitors database.

Because competitions are not always held in the same environment or on the same track it is preferred that the system according to one of the preceding claims, comprises an environment database in which data about a number of possible competition environments are stored so that, after the specific environment where the competition will be held is known, the simulation of said environment can be adapted to the choice of the real environment.

In general the number of tracks for a specific sports or competition or the environments for a certain event are restricted. Adding or deleting environments is not very likely but not inconceivable. In that case it is preferred that data about an environment which is not contained in the environment database can be transferred from a suitable source to the system through suitable transfer means to become stored in said environment database.

To make the simulation of the environment as realistic as possible it is preferred that the simulation of the environment can be realised by means of images, which are taken on the real environment by suitable means.

The invention will be explained in more detail hereinafter with reference to the attached drawings.

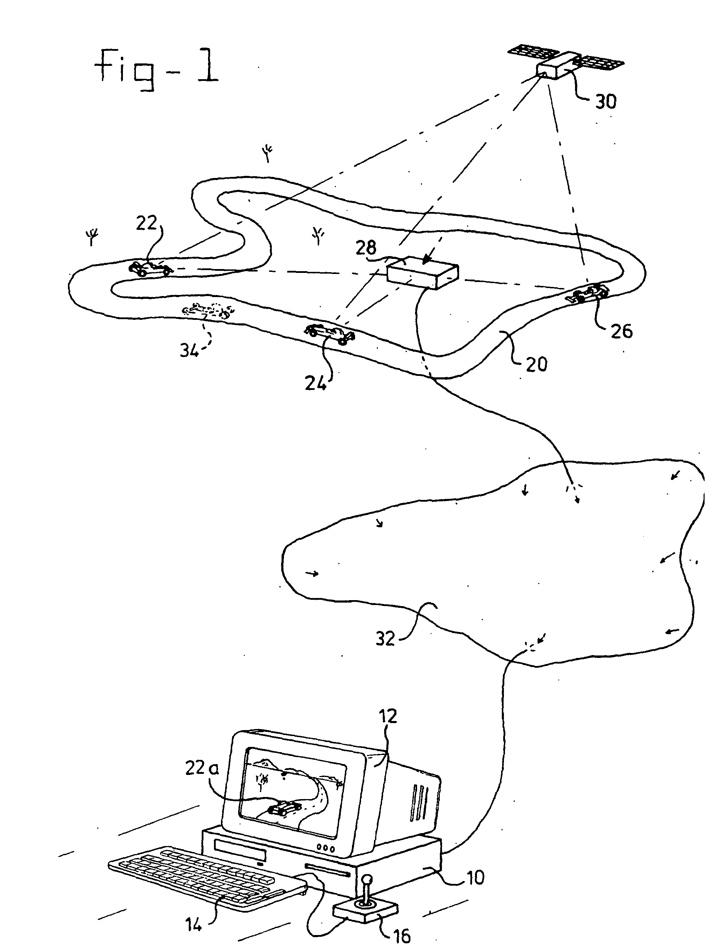

Figure 1 illustrates a first embodiment of a system according to the invention. The system comprises a computer 10 with a display screen 12, a keyboard 14 and a joystick 16. The computer 10 is loaded with software for simulating a competition environment on the screen 12 of the system. This competition environment comprises a predetermined track along which a number of competitors are able to move between a starting position and a final position. The track is displayed from the standpoint of the user of the system, which in fact is one of the competitors in the simulated competition environment. In the momentaneous state the screen of the display unit 12 shows part of an autorace track whereby at the left side in front of the user another competitor is visible. The user is able to influence its own speed and direction by means of the joystick 16 or by means of another input device.

Systems of the type as described above are generally known as so-called computer games or computer-animations whereby the user has the possibility to compete as it were in a race.

To significantly improve the illusion of "reality" in agreement with the invention a relation is established between the simulation on the screen 12 and a real game from a real circuit. In figure 1 a real circuit is indicated by 20 and on this circuit a race is in progress with amongst others the competitors 22, 24 and 26. Each of the competitors carries apparatuses by means of which continuously data about the momentaneous position of the competitor on the circuit can be transferred to a central post 28. The positional data can be collected for instance by means of a GPS receiver installed in each vehicle which receiver by means of a number of GPS satellites, one of which being indicated by 30 in the figure, is able to determine accurately its own position. The data supplied by the GPS receiver determines therefore at any moment accurately the position of each competitor on the track 20. These positional data can now be transferred through a communication network 32 to the computer 10. The computer 10 in this application is loaded with software which has the ability to simulate the real track 20 on the screen 12 in an accurate manner and with very high reality content. The user of the system will get the impression that he is driving on the real track 20. Furthermore the software is embodied such that other competitors are simulated on the screen at those positions on the simulated track which correspond to the positions on the real track 20 where the competitors 22, 24, 26 etc. are present in reality. If the user on the simulated track 20 for instance will take a momentaneous position behind the real competitor 22, then on the real track 20 this can be indicated by means of the virtual competitor 34. The user of the system, which plays the role of said virtual competitor 34, will on his screen see the simulated real competitor 22, which in figure 1 is indicated by 22a.

Above it is assumed that GPS receivers are used for locating the positions. On the one hand not all GPS receivers will be suitable for this application. Normally GPS receivers determine the position with an accuracy of some tenths of meters. However, if a correction is applied then the accuracy increases less then a few centimetres. An example of a correction means is for instance the so-called DGPS-system which is known as such. Within the scope of the invention preferably receivers with such a correction are applied.

The data network 32 may comprise a telephone network whereby both wires bounded as well as wireless telephone networks and eventual combinations thereof are conceivable. The advantage of a telephone network is that there is almost synchronism between the real competition on the real circuit 20 and the simulated competition on the image screen 12. The disadvantage of using the telephone network is however that in general the costs for taking part in a complete competition of for instance two hours may increase significantly. Therefore it is preferred to use, instead of a telephone network, for instance the internet. The user should have an internet connection and should be able to log in through this connection onto a specific site where continuously and with the least possible delay position data of all competitors in the real competition are made available. These positional data are continuously loaded in the software running on the computer 10. Said computer 10 is thereafter able to perform the simulation on the screen 12 such that the simulated race on the screen 12 is almost synchronous with the real race on the real circuit 20. The advantage of this method is that, in case the site has enough connections available and has a sufficient accessibility, a large number of users may "take part" simultaneously, each with an own system to the real race on the circuit 20.

Instead of the internet also use can be made of television networks. The positional data are in that case transferred through the teletext-system to the users. Eventually the screen of the television receiver can be used for visualising the simulation instead of the computer display.

Until so far it is assumed that the simulated competition concerns an autorace. However, the invention is not restricted thereto. Instead of an autorace it could concern a motorrace, a bicycle competition, a running competition, a horserace, races with powerboats or sailing vessels, military exercises etc. Furthermore it is not necessary that the competition be performed at closed circuit such as the circuit 20 in the figure, whereby the race is performed over a certain number of rounds. Instead thereof the track may consist of a single track between certain starting point and a certain final point. In this way it is for instance possible to simulate tracks of bicycle competitions such as the Tour de France etc. on the screen of the system. However, it will be clear that heavier requirements will be put to the memory capacitor of the computer because the track data of a much longer track have to be stored in the computer.

Because competitions do not always take place on the same track it is preferred that the computer 10 has memory means for storing a number of competition environments. Therewith the user of the system is able, notwithstanding the place where the race is being held, to take part in the race because the correct environment can be called up from the memory.

In a similar manner it is preferred that the system 10 comprises a memory in which the data about a large number of real competitors are stored dependent on the competitors which at a certain moment are taking part in a real competition, the respective data of the competitors can be called up from a memory and therewith the real participating competitors can be simulated on the screen.

In the above-described embodiments it is assumed that the simulated game and the real game are performed almost synchronously. However, it is not always necessary. In a preferred embodiment all position data which are gathered during the competition together with the corresponding time measurements are stored in a suitable memory means during the competition. Said memory means may function as transfer medium and can be, after all data are stored, transferred to the system and can be used by the user at any voluntary moment to take part in the race at a much later time. As memory means preferably use is made of a compact disc because more and more personal computers comprise a CD player. Because said compact disc forms a significant product within the system separate rights are claimed for said compact disc through the attached claims.

Another important component of the system in an embodiment where the internet is used as communication means is the internet site, where the users have to log in to obtain the positional data. Also for this site, through which the positional data are made available, and which site is characterised thereby, separate rights are claimed through the attached claims.

## Claims

1. System for simulating events in a real environment containing static objects (20) and dynamic objects (22, 24, 26), comprising:
a) position locating means for continuously determining in the real environment the position of said dynamic objects (22, 24, 26) in relation to said static objects (20) within a time period in which the event takes place,
b) storage means for storing data describing the dynamic (22, 24, 26) and static (20) objects of said environment,
c) processing means for processing
b1) data from said storage means describing the static and dynamic objects
b2) data from the position locating means indicating at a certain moment the mutual positions of the static and dynamic objects of the environment, said processing means being loaded with simulation software
d) display means (12) for displaying a simulated view from a selected viewpoint on the simulated environment as result of the processing by the processing means,
e) control means to repeat the functioning of the means mentioned under c) and d) for a range of consecutive time moments which together determine the above-mentioned time period.
**characterised in that** said position locating means comprises a satellite navigation system for directly determining the position of the objects (20, 22, 24, 26) in the real environment.

2. System according to claim 1, **characterised in that** the storage means, processing means, display means and control means are installed as a user terminal (10) at a place remote from the real environment and that transfer means (32) are used to transfer positional data from the position locating means to the storage means.

3. System according to claim 1, **characterised in that** for each user of the system storage means, processing means, display means and control means are installed as user terminals (10) at a place remote from the real environment and that transfer means (32) are used to transfer positional data from the position locating means to all said storage means.

4. System according to claim 2 or 3, **characterised in that** the internet is used as transfer means (32).

5. System according to claim 2 or 3, **characterised in that** a telephone network is used as transfer means (32).

6. System according to any of the preceding claims, **characterised in that** during the whole time period of a competition all positional data together with corresponding time data are stored in a suitable memory, which memory can be used after the competition as transfer medium (32).

7. System according to claim 6, **characterised in that** the memory is formed by a compact disc (short CD), or a similar device.

8. System according to one of the preceding claims, **characterised in that** the system comprises a competitors database in which data about a number a possible competitors are stored so that, after the competitors for a particular event or competition are known, the simulation of the real competitors within the simulated environment can be adapted.

9. System according to claim 8, **characterised in that** data about competitors which are not present in the competitor database can be transferred through a suitable transfer medium from a suitable source to the system to become stored in said competitor database.

10. System according to claim 8 or 9, **characterised in that** the competitors database is integrated into the user terminal (10).

11. System according to one of the preceding claims, **characterised in that** the system comprises an environment database in which data about a number of possible competition environments are stored so that, after the specific environment where the competition will be held is known, the simulation of said environment can be adapted to the choice of the real environment.

12. System according to claim 11, **characterised in that** data about an environment which is not contained in the environment database can be transferred from a suitable source to the system through suitable transfer means to become stored in said environment database.

13. System according to claim 11 or 12, **characterised in that** the environment database is integrated into the user terminal (10).

14. System according to one of the preceding claims, **characterised in that** the simulation of the real environment can be realised by means of images which are taken from the real environment by suitable means.

15. System according to claim 4 or 5 and thereto backreferring claims, **characterised in that** special events, which will happen during the real competition, are stored as separate image data in said memory respectively CD, such that these images can be displayed at suitable time moments during the simulated competition.

16. System according to one of the preceding claims, **characterised in that** the display means (12) for displaying the simulation of at least part of the environment with the dynamic objects therein is formed by a so-called "virtual reality-helmet".

## Patentansprüche

1. System zum Simulieren von Ereignissen in einer realen Umgebung, die statische Objekte (20) und dynamische Objekte (22, 24, 26) enthält, das umfasst:
(a) eine Positionsermittlungseinrichtung, die kontinuierlich in der realen Umgebung die Position der dynamischen Objekte (22, 24, 26) in Bezug auf die statischen Objekte (20) innerhalb eines Zeitraums bestimmt, in dem das Ereignis stattfindet,
(b) eine Speichereinrichtung zum Speichern von Daten, die die dynamischen (22, 24, 26) und statischen (20) Objekte der Umgebung beschreiben,
(c) eine Verarbeitungseinrichtung, die verarbeitet:
b1) Daten von der Speichereinrichtung, die die statischen und dynamischen Objekte beschreiben, .
b2) Daten von der Positionsermittlungseinrichtung, die zu einem bestimmten Zeitpunkt die Positionen der statischen und dynamischen Objekte der Umgebung zueinander anzeigen, wobei Simulationssoftware in die Verarbeitungseinrichtung geladen ist,
(d) eine Anzeigeeinrichtung (12), die eine simulierte Ansicht von einem ausgewählten Standpunkt auf die simulierte Umgebung als Ergebnis der Verarbeitung durch die Verarbeitungseinrichtung anzeigt;
(e) eine Steuereinrichtung, die die Funktionen der in c) und d) erwähnten Einrichtungen über einen Bereich aufeinanderfolgender Zeitpunkte wiederholt, die zusammen den oben genannten Zeitraum bestimmen,
**dadurch gekennzeichnet, dass** die Positionsermittlungseinrichtung ein Satellitennavigationssystem zum direkten Bestimmen der Position der Objekte (20, 22, 24, 26) in der realen Umgebung umfasst.

2. System nach Anspruch 1, **dadurch gekennzeichnet, dass** die Speichereinrichtung, die Verarbeitungseinrichtung, die Anzeigeeinrichtung und die Steuereinrichtung als eine Benutzerstation (10) an einem von der realen Umgebung entfernten Ort installiert sind und dass eine Übertragungseinrichtung (32) genutzt wird, um Positionsdaten von der Positionsermittlungseinrichtung zu der Speichereinrichtung zu übertragen.

3. System nach Anspruch 1, **dadurch gekennzeichnet, dass** für jeden Benutzer des Systems Speichereinrichtung, Verarbeitungseinrichtung, Anzeigeeinrichtung und Steuereinrichtung als Benutzerstationen (10) an einem von der realen Umgebung entfernten Ort installiert sind, und dass eine Übertragungseinrichtung (32) genutzt wird, um Positionsdaten von der Positionsermittlungseinrichtung zu allen Speichereinrichtungen zu übertragen.

4. System nach Anspruch 2 oder 3, **dadurch gekennzeichnet, dass** das Internet als die Übertragungseinrichtung genutzt wird.

5. System nach Anspruch 2 oder 3, **dadurch gekennzeichnet, dass** ein Telefonnetz als Übertragungseinrichtung (32) genutzt wird.

6. System nach einem der vorangehenden Ansprüche, **dadurch gekennzeichnet, dass** während des gesamten Zeitraums eines Wettkampfes alle Positionsdaten zusammen mit entsprechenden Zeitdaten in einem geeigneten Speicher gespeichert werden, wobei der Speicher nach dem Wettkampf als Übertragungsmedium (32) genutzt werden kann.

7. System nach Anspruch 6, **dadurch gekennzeichnet, dass** der Speicher aus einer Compact Disc (CD) oder einer ähnlichen Vorrichtung besteht.

8. System nach einem der vorangehenden Ansprüche, **dadurch gekennzeichnet, dass** das System eine Wettkampfteilnehmer-Datenbank umfasst, in der Daten über eine Anzahl möglicher Wettkampfteilnehmer gespeichert sind, so dass, nachdem die Wettkampfteilnehmer für ein bestimmtes Ereignis oder einen bestimmten Wettkampf bekannt sind, die Simulation der realen Wettkampfteilnehmer in der simulierten Umgebung eingerichtet werden kann.

9. System nach Anspruch 8, **dadurch gekennzeichnet, dass** Daten über Wettkampfteilnehmer, die in der Wettkampfteilnehmer-Datenbank nicht vorhanden sind, über ein geeignetes Übertragungsmedium von einer geeigneten Quelle zu dem System übertragen werden können, um sie in der Wettkampfteilnehmer-Datenbank zu speichern.

10. System nach Anspruch 8 oder 9, **dadurch gekennzeichnet, dass** die Wettkampfteilnehmer-Datenbank in die Benutzerstation (10) integriert ist.

11. System nach einem der vorangehenden Ansprüche, **dadurch gekennzeichnet, dass** das System eine Umgebungs-Datenbank umfasst, in der Daten über eine Anzahl möglicher Wettbewerbs-Umgebungen gespeichert sind, so dass, nachdem die spezielle Umgebung, in der der Wettkampf abgehalten wird, bekannt ist, die Simulation der Umgebung an die Wahl der realen Umgebung angepasst werden kann.

12. System nach Anspruch 11, **dadurch gekennzeichnet, dass** Daten über eine Umgebung, die nicht in der Umgebungs-Datenbank enthalten ist, über eine geeignete Übertragungseinrichtung von einer geeigneten Quelle zu dem System übertragen werden können, um sie in der Umgebungs-Datenbank zu speichern.

13. System nach Anspruch 11 oder 12, **dadurch gekennzeichnet, dass** die Umgebungs-Datenbank in die Benutzerstation (10) integriert ist.

14. System nach einem der vorangehenden Ansprüche, **dadurch gekennzeichnet, dass** die Simulation der realen Umgebung mit Bildern realisiert werden kann, die mit geeigneten Mitteln von der realen Umgebung gemacht werden.

15. System nach Anspruch 4 oder 5 und darauf Bezug nehmenden Ansprüche, **dadurch gekennzeichnet, dass** spezielle Ereignisse, die während des realen Wettkampfes stattfinden als separate Bilddaten in dem Speicher bzw. der CD gespeichert werden, so dass diese Bilder zu geeigneten Zeitpunkten während des simulierten Wettkampfes angezeigt werden können.

16. System nach einem der vorangehenden Ansprüche, **dadurch gekennzeichnet, dass** die Anzeigeeinrichtung (12) zum Anzeigen der Simulation wenigstens eines Teils der Umgebung mit den dynamischen Objekten darin durch einen so genannten "Virtual-Reality-Helm" gebildet wird.

## Revendications

1. Système pour simuler des évènements dans un environnement réel contenant des objets statiques (20) et des objets dynamiques (22, 24, 26), comprenant :
a) des moyens de repérage de position pour déterminer de façon continue dans l'environnement réel la position desdits objets dynamiques (22, 24, 26) par rapport auxdits objets statiques (20) dans une période de temps au cours de laquelle les évènements ont lieu,
b) des moyens de stockage pour conserver les données décrivant les objets dynamiques (22, 24, 26) et les objets statiques (20) dudit environnement,
c) des moyens de traitement pour traiter
b1) des données à partir desdits moyens de stockage décrivant les objets statiques et dynamiques
b2) des données à partir des moyens de repérage de position indiquant à un moment donné les positions mutuelles des objets statiques et dynamiques de l'environnement, lesdits moyens de traitement étant chargés avec un programme informatique de simulation
d) des moyens d'affichage (12) pour afficher une vue simulée à partir d'un point de vue simulé sur l'environnement simulé en résultat du traitement par les moyens de traitement,
e) des moyens de commande pour répéter le fonctionnement des moyens mentionnés sous c) et d) pour une série de moments consécutifs qui ensemble définissent la période de temps mentionnée ci-dessus,
**caractérisé en ce que** lesdits moyens de repérage de position comportent un système de navigation satellite pour déterminer directement la position des objets (20, 22, 24, 26) dans l'environnement réel.

2. Système selon la revendication 1, **caractérisé en ce que** les moyens de stockage, les moyens de traitement, les moyens d'affichage et les moyens de commande sont installés en tant que terminal d'utilisateur (10) en un lieu éloigné de l'environnement réel et **en ce que** des moyens de transfert (32) sont utilisés pour transférer les données de position des moyens de repérage de position aux moyens de stockage.

3. Système selon la revendication 1, **caractérisé en ce que** pour chaque utilisateur du système des moyens de stockage, des moyens de traitement, des moyens d'affichage et des moyens de commande sont installés en tant que terminaux d'utilisateur (10) en un lieu éloigné de l'environnement réel et **en ce que** des moyens de transfert (32) sont utilisés pour transférer les données de position des moyens de repérage de position à tous lesdits moyens de stockage.

4. Système selon la revendication 2 ou la revendication 3, **caractérisé en ce que** l'internet est utilisé en tant que moyen de transfert.

5. Système selon la revendication 2 ou la revendication 3, **caractérisé en ce qu'**un réseau téléphonique est utilisé en tant que moyen de transfert.

6. Système selon l'une quelconque des revendications précédentes, **caractérisé en ce que** pendant toute la période entière de temps d'une compétition toutes les données de position avec les données de temps correspondantes sont stockées dans une mémoire appropriée, laquelle mémoire peut être utilisée après la compétition comme média de transfert (32).

7. Système selon la revendication 6, **caractérisé en ce que** la mémoire est formée par un compact disque (court CD), ou un dispositif similaire.

8. Système selon l'une quelconque des revendications précédentes, **caractérisé en ce que** le système comprend une base de données de compétiteurs dans laquelle des données sur un certain nombre de compétiteurs possibles sont stockées de telle manière que, après que les compétiteurs pour un évènement particulier ou une compétition particulière sont connus, la simulation portant sur les réels compétiteurs dans l'environnement simulé puissent être adaptée.

9. Système selon la revendication 8, **caractérisé en ce que** des données sur des compétiteurs qui ne sont présents dans la base de données de compétiteurs peuvent être transférés par le biais d'un média de transfert approprié d'une source appropriée vers le système pour être conservées dans ladite base de données de compétiteurs.

10. Système selon la revendication 8 ou la revendication 9, **caractérisé en ce que** la base de données de compétiteurs est intégrée dans le terminal d'utilisateur (10).

11. Système selon l'une quelconque des revendications précédentes, **caractérisé en ce que** le système comprend une base de données d'environnements dans laquelle des données sur un certain nombre d'environnements de compétition possibles sont stockées de telle manière que, après que l'environnement particulier dans lequel la compétition se tiendra est connu, la simulation portant sur ledit environnement peut être adaptée au choix de l'environnement réel.

12. Système selon la revendication 11, **caractérisé en ce que** des données sur un environnement qui n'est pas compris dans la base de données d'environnements peuvent être transférées d'une source appropriée vers le système par le biais de moyens de transfert pour être conservées dans ladite base de données d'environnements.

13. Système selon la revendication 11 ou la revendication 12, **caractérisé en ce que** la base de données d'environnements est intégrée dans le terminal d'utilisateur (10).

14. Système selon l'une quelconque des revendications précédentes, **caractérisé en ce que** la simulation de l'environnement réel peut être réalisée au moyen d'images qui sont prises à partir de l'environnement réel par des moyens appropriés.

15. Système selon la revendication 4 ou la revendication 5 et les revendications qui s'y réfèrent, **caractérisé en ce que** des évènements spéciaux, qui se passent pendant la compétition réelle, sont conservés en tant que données d'images séparées dans ladite mémoire respectivement CD, de telle façon que ces images puissent être affichées à des moments appropriés pendant la compétition simulée.

16. Système selon l'une quelconque des revendications précédentes, **caractérisé en ce que** les moyens d'affichage (12) pour afficher la simulation d'une partie au moins de l'environnement avec les objets dynamiques à l'intérieur sont formés par un élément dénommé « casque virtuel de réalité ».
